# EUROPÄISCHE PATENTSCHRIFT

(11) **EP 2 996 004 B1**
(45) Veröffentlichungstag und Bekanntmachung des Hinweises auf die Patenterteilung: **08.04.2020**
(21) Anmeldenummer: 14184108.0
(22) Anmeldetag: 09.09.2014
(51) Int. Cl.: G05B 19/418, H04L 12/24, H04L 12/751, H04L 12/26, H04L 29/12

(54) **Verfahren zur Bereitstellung von Informationen über Kommunikationsnetzadressen innerhalb eines industriellen Automatisierungssystems und Router**
Method for providing information relating to communication network addresses within an industrial automation system and router
Procédé de mise à disposition d'informations concernant des noms de réseaux de communication au sein d'un système d'automatisation industriel et routeur

(43) Veröffentlichungstag der Anmeldung: 16.03.2016
(73) Patentinhaber: Siemens Aktiengesellschaft, 80333 München (DE)
(72) Erfinder: Albrecht, Harald, 90475 Nürnberg (DE); Plonka, Reiner, 90768 Fürth (DE); Biehler, Georg, 90453 Nürnberg (DE); Blumenstock, Werner, 91085 Weisendorf (DE)

(56) Entgegenhaltungen:
- EP-A1- 1 919 132
- WO-A1-2013/137884
- DE-A1-102009 045 386

## Beschreibung

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In WO 2007/144364 A1 ist ein Verfahren zur Vernetzung einer automatisierten Anlage beschrieben, die zumindest eine Zelle mit einem Subnetz umfasst. Das Subnetz ist über einen Router an ein weiteres Subnetz der automatisierten Anlage angebunden. Zur Vernetzung der automatisierten Anlage wird eine Multicastgruppe bereitgestellt, die sich über beide Subnetze erstreckt. Mittels der Multicastgruppe wird eine Kommunikationsnetzadresse einer Kommunikationsnetzschnittstelle einer Baugruppe detektiert. Dabei ist die Baugruppe der Multicastgruppe zuvor über die Kommunikationsnetzadresse beigetreten, und die Kommunikationsnetzschnittstelle ist zuvor an das Subnetz angeschlossen worden. Über die Kommunikationsnetzadresse wird ein Name an die Kommunikationsnetzschnittstelle der Baugruppe zugewiesen. In einem weiteren Schritt erfolgt eine Ermittlung einer weiteren Kommunikationsnetzadresse der Kommunikationsnetzschnittstelle der Baugruppe, die zumindest einen Teil einer numerischen Repräsentation des Namens aufweist.

Aus der älteren europäischen Patentanmeldung mit dem Anmeldeaktenzeichen 14166194.2, veröffentlicht als EP2940926, ist ein Verfahren zur Konfiguration eines Kommunikationsgeräts innerhalb eines industriellen Automatisierungssystems bekannt, bei dem eine Konfigurationseinheit des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen. Vorteilhafterweise kann das beschriebene Verfahren zur Konfiguration eines Kommunikationsgeräts in Ethernet-Kommunikationsnetzen ohne IP-Subnetzbildung angewendet werden. Insbesondere sind dabei keine IP-Router zur Bildung von Domänengrenzen erforderlich.

Die ältere europäische Patentanmeldung mit dem Anmeldeaktenzeichen 14166376.5, veröffentlicht als EP2940972, betrifft ein Verfahren zur Bereitstellung eines Namensdienstes innerhalb eines industriellen Kommunikationssystems, bei dem IPv6-Präfixe durch Router mittels Nachrichten mit Router-Bekanntgaben (Router Advertisements) in jeweils unterlagerten Teilnetzen verbreitet werden. Die Router-Bekanntgaben umfassen einen topologischen bzw. hierarchischen Namensbestandteil des jeweiligen Routers, wobei der topologische bzw. hierarchische Namensbestandteil einer räumlichen oder hierarchischen Anordnung des jeweiligen Routers zugeordnet ist. Router-Bekanntgaben mit Namensinformationen aus überlagerten Teilnetzen werden durch unterlagerten Teilnetzen zugeordnete Router entgegen genommen und um einen dem jeweiligen Router zugeordneten topologischen bzw. hierarchischen Namensbestandteil ergänzt und innerhalb des jeweiligen unterlagerten Teilnetzes verbreitet. Aus topologischen bzw. hierarchischen Namensbestandteilen und einem innerhalb ihres jeweiligen Teilnetzes eindeutigen Namensbestandteil erzeugen Kommunikationsendgeräte, also Kommunikationsgeräte ohne Routing-Funktionen, selbständig ihren Gerätenamen. Hierdurch wird eine einfache Inbetriebnahme von Serienmaschinen ermöglicht, da aufgrund oben genannter automatischer Vervollständigung lediglich auf Maschinenebene eindeutige Namen auszuwählen sind.

In der älteren europäischen Patentanmeldung mit dem Anmeldeaktenzeichen 14182111.6, veröffentlicht als EP2991320, ist ein Verfahren zur Ermittlung von Kommunikationsgerätenamen innerhalb eines industriellen Automatisierungssystems beschrieben, bei dem mittels einer Diagnoseeinheit Konfigurationsdaten eines ausgewählten Kommunikationsgeräts abgefragt werden, dessen Kommunikationsgerätename zu ermitteln ist. Dabei umfassen die Konfigurationsdaten einen Geräteidentifikator und eine Kommunikationsnetzadresse des ausgewählten Kommunikationsgeräts sowie eine Kommunikationsnetzadresse und einen Teilnetzidentifikator einer lokalen Konfigurationseinheit. Die Diagnoseeinheit übermittelt anhand der abgefragten Konfigurationsdaten ein Datagramm zur Namensabfrage an eine Diagnosedatenbereitstellungseinheit, die dem das ausgewählte Kommunikationsgerät umfassenden Teilnetz zugeordnet ist. Anhand des Geräteidentifikators bzw. der Kommunikationsnetzadresse des ausgewählten Kommunikationsgeräts löst die Diagnosedatenbereitstellungseinheit eine inverse Adressauflösungsabfrage aus. Dadurch wird die Kommunikationsnetzadresse des ausgewählten Kommunikationsgeräts auf dessen Kommunikationsgerätenamen abgebildet. Dies ermöglicht eine schnelle und zuverlässige Ermittlung von Kommunikationsgerätenamen.

Bei einer Inbetriebnahme oder Überwachung von Automatisierungsgeräten kann es erforderlich sein, alle Automatisierungsgeräte innerhalb eines Subnetzes einschließlich sämtlicher Kommunikationsnetzadressen zu ermitteln, die den Automatisierungsgeräten zugeordnet sind. Insbesondere in IPv6-basierten Kommunikationsnetzen ist Kommunikationsgeräten üblicherweise jeweils eine Vielzahl Kommunikationsadressen zugeordnet, die beispielsweise Link-lokal (link-local address), lokal eindeutig (unique local address) oder global eindeutig (global unique address) sein können. Für einen Zugriff eines Engineering-Systems, Diagnosewerkszeugs oder Inbetriebnahmeprogramms auf ein Automatisierungsgerät ist es wichtig, kontextabhängig eine jeweils geeignete Adressinformation bereitzustellen.

Der vorliegenden Erfindung liegt die Aufgabe zugrunde, ein Verfahren zur schnellen und vollständigen teilnetzübergreifenden Bereitstellung von Informationen über Kommunikationsadressen innerhalb eines industriellen Automatisierungssystems zu schaffen sowie geeignete Vorrichtungen zu dessen Durchführung anzugeben.

Diese Aufgabe wird erfindungsgemäß durch ein Verfahren mit den in Anspruch 1 angegebenen Merkmalen und durch einen Router mit den in Anspruch 9 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Bereitstellung von Informationen über Kommunikationsnetzadressen innerhalb eines industriellen Automatisierungssystems verbreiten Kommunikationsgeräte innerhalb des industriellen Automatisierungssystem mittels einer jeweiligen Namensdienstkomponente Informationen über Zuordnungen zwischen Gerätenamen und Kommunikationsnetzadressen innerhalb ihres jeweiligen Teilnetzes entsprechend einem Namensauflösungsprotokoll. Teilnetze miteinander koppelnde Router umfassen jeweils eine korrespondierende Namensdienstkomponente, durch die Informationen über sämtliche Zuordnungen von Kommunikationsnetzadressen zu Kommunikationsgeräten untergeordneter Teilnetze aggregiert werden. Dabei basieren die aggregierten Informationen auf den entsprechend dem Namensauflösungsprotokoll verbreiteten Informationen über Zuordnungen zwischen Gerätenamen und Kommunikationsnetzadressen.

Erfindungsgemäß werden die aggregierten Informationen über Zuordnungen von Gerätenamen und Kommunikationsnetzadressen zu Kommunikationsgeräten durch die Namensdienstkomponenten an eine Diagnoseserverkomponente des jeweiligen Routers abrufbar bereitgestellt. Auf dieser Grundlage räumen die Diagnoseserverkomponenten der jeweiligen Router autorisierten Diagnosesystemen teilnetzübergreifend Zugriff auf Informationen über Zuordnungen von Gerätenamen und Kommunikationsnetzadressen zu Kommunikationsgeräten ein, die von dem jeweiligen Router unterlagerten Teilnetzen umfasst sind. Durch das erfindungsgemäße Verfahren erhalten beispielsweise Diagnose-, Inbetriebnahme- oder Engineering-Systeme 401 einerseits Informationen über Gerätenamen aller in einem ausgewählten Teil- bzw. Subnetz vorhandenen Kommunikationsgeräte, ohne dazu vor Ort direkt an das jeweilige Teil- bzw. Subnetz angeschlossen sein zu müssen.

Vorzugsweise verbreiten die Kommunikationsgeräte die Informationen über Zuordnungen zwischen Gerätenamen und Kommunikationsnetzadressen mittels ihrer jeweiligen Namensdienstkomponente dezentral und konfigurationslos. Entsprechend einer vorteilhaften Weiterbildung der vorliegenden Erfindung werden die Informationen über Zuordnungen zwischen Gerätenamen und Kommunikationsnetzadressen entsprechend Multicast DNS Protokoll als Namensauflösungsprotokoll verbreitet. Dabei erzeugen beispielsweise die Namensdienstkomponenten innerhalb des das jeweilige Kommunikationsgerät umfassenden Teilnetzes Nachrichten entsprechend Multicast DNS Protokoll und werten diese aus. Entsprechend einer alternativen Ausführungsform der vorliegenden Erfindung, bei der das industrielle Automatisierungssystem PROFINET-basiert ist, verbreiten die Kommunikationsgeräte die Informationen über Zuordnungen zwischen Gerätenamen und Kommunikationsnetzadressen entsprechend Discovery and Basic Configuration Protocol. Somit kann auch auf diese Weise eine dezentrale Verbreitung von Informationen über Zuordnungen zwischen Gerätenamen und Kommunikationsnetzadressen erfolgen.

Entsprechend einer weiteren vorteilhaften Ausgestaltung der vorliegenden Erfindung werden die Namensdienstkomponenten jeweils Internet-Protokoll-basiert betrieben. Dabei verbreiten die Namensdienstkomponenten vorzugsweise jeweils Informationen über sämtliche Kommunikationsnetzadressen des jeweiligen Kommunikationsgeräts. Die Kommunikationsnetzadressen können beispielsweise Internet-Protokoll, Version 6 entsprechen und zumindest eine implizite Angabe ihres Gültigkeitsbereichs umfassen.

Der erfindungsgemäße Router zur Durchführung eines Verfahrens entsprechend vorangehenden Ausführungen umfasst Namensdienstkomponente, die dafür ausgestaltet und eingerichtet ist, Informationen über sämtliche Zuordnungen von Kommunikationsnetzadressen zu Kommunikationsgeräten untergeordneter Teilnetze zu aggregieren. Dabei basieren die aggregierten Informationen auf entsprechend einem Namensauflösungsprotokoll durch die Kommunikationsgeräte verbreiteten Informationen über Zuordnungen zwischen Gerätenamen und Kommunikationsnetzadressen. Darüber hinaus ist eine Diagnoseserverkomponente vorgesehen, die dafür ausgestaltet und eingerichtet ist, die aggregierten Informationen über Zuordnungen von Gerätenamen und Kommunikationsnetzadressen zu Kommunikationsgeräten von der Namensdienstkomponenten abzurufen und autorisierten Diagnosesystemen teilnetzübergreifend Zugriff auf die Informationen über Zuordnungen von Gerätenamen und Kommunikationsnetzadressen zu Kommunikationsgeräten einzuräumen.

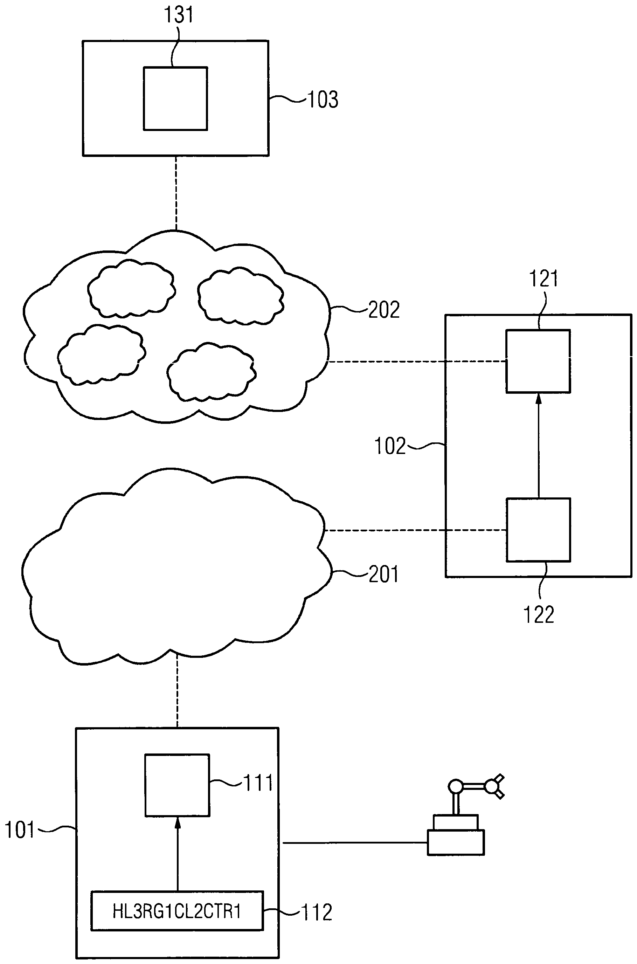

Die vorliegende Erfindung wird nahfolgend an einem Ausführungsbeispiel anhand der Zeichnung näher beschrieben. Es zeigt die
- Figur: ein zwei Teilnetze umfassendes industrielles Kommunikationsnetz mit einer Diagnosestation, einem Router und einem zu analysierenden Kommunikationsgerät.

Das in der Figur dargestellte Kommunikationsnetz umfasst zwei durch einen Router 102 miteinander gekoppelte Subnetze 201, 202, ein ausgewähltes Kommunikationsgerät 101 in einem ersten Subnetz 201 und ein Diagnosesystem 103 in einem zweiten Teilnetz 202. Das Diagnosesystem 103 kann beispielsweise eine Komponente eines Engineering-Systems zur Projektierung eines industriellen Automatisierungssystems sein.

Das Diagnosesystem 103 ist zur Ermittlung sämtlicher Kommunikationsnetzadressen des ausgewählten Kommunikationsgeräts 101 sowie seines funktional bzw. räumlich charakterisierenden Gerätenamens 112 vorgesehen. Das ausgewählte Kommunikationsgerät 101 kann beispielsweise einem industriellen Automatisierungsgerät, wie einer Speicherprogrammierbaren Steuerung oder einem Feldgerät, zugeordnet oder in ein industrielles Automatisierungsgerät integriert sein, so dass durch den Gerätenamen 112 auch das jeweilige industrielle Automatisierungsgerät charakterisiert werden kann.

Ebenso wie sämtliche Kommunikationsgeräte zumindest innerhalb des ersten Subnetzes 201 umfasst das ausgewählte Kommunikationsgerät 101 im vorliegenden Ausführungsbeispiel eine Namensdienstkomponente 111, mittels der das ausgewählte Kommunikationsgerät 101 Informationen über Zuordnungen zwischen Gerätenamen und Kommunikationsnetzadressen innerhalb seines Subnetzes 201 entsprechend Multicast DNS Protokoll als Namensauflösungsprotokoll verbreitet. Dabei erzeugt die Namensdienstkomponente 111 Nachrichten entsprechend Multicast DNS Protokoll erzeugen und wertet diese aus. Auf diese Weise werden die Informationen über Zuordnungen zwischen Gerätenamen und Kommunikationsnetzadressen dezentral und konfigurationslos verbreitet. Die Namensdienstkomponente 111 ist Internet-Protokoll-basiert und verbreitet Informationen über sämtliche Kommunikationsnetzadressen des ausgewählten Kommunikationsgeräts 101, die im vorliegenden Ausführungsbeispiel Internet-Protokoll, Version 6 entsprechen und zumindest eine implizite Angabe ihres Gültigkeitsbereichs umfassen.

Auch der Router 102 umfasst eine Namensdienstkomponente 122, durch die Informationen über sämtliche Zuordnungen von Kommunikationsnetzadressen zu Kommunikationsgeräten des ersten Subnetzes 201 aggregiert werden. Dabei basieren die aggregierten Informationen auf entsprechend Multicast DNS Protokoll durch die Kommunikationsgeräte des ersten Subnetzes 201 verbreiteten Informationen über Zuordnungen zwischen Gerätenamen und Kommunikationsnetzadressen. Darüber hinaus weist der Router 102 eine durch einen Diagnose-Client 131 des Diagnosesystems 103 nutzbare Diagnoseserverkomponente 121 auf. Durch diese Diagnoseserverkomponente 121 werden die aggregierten Informationen über Zuordnungen von Gerätenamen und Kommunikationsnetzadressen zu Kommunikationsgeräten von der Namensdienstkomponente 121 des Routers 102 abgerufen. Einem autorisierten Diagnosesystem 103 räumt die Diagnoseserverkomponente 121 subnetzübergreifend Zugriff auf die Informationen über Zuordnungen von Gerätenamen und Kommunikationsnetzadressen zu Kommunikationsgeräten ein.

Autorisierten Diagnosesysteme erhalten über die Diagnoseserverkomponente 121 insbesondere Informationen über sämtliche den Kommunikationsgeräten des ersten Subnetzes 201 jeweils zugeordnete Kommunikationsnetzadressen. Da Kommunikationsgeräten bei IPv6 selbst mit jeweils nur einem einzigen Anschlusspunkt an ein Subnetz regelmäßig mehr als eine Kommunikationsnetzadresse zugewiesen ist und IPv6-Adressen unterschiedliche Reichweiten aufweisen können, kann das Diagnosesystem 103 durch vollständige Adresskenntnis eine passende IPv6-Zieladresse wählen, mit der es das jeweilige Kommunikationsgerät unmittelbar adressieren kann.

Alternativ zu einer Verwendung des Multicast DNS Protokoll als Namensauflösungsprotokoll können in PROFINET-basierten industriellen Automatisierungssystemen die Informationen über Zuordnungen zwischen Gerätenamen und Kommunikationsnetzadressen entsprechend Discovery and Basic Configuration Protocol verbreitet werden.

## Patentansprüche

1. Verfahren zur Bereitstellung von Informationen über Kommunikationsnetzadressen innerhalb eines industriellen Automatisierungssystems, bei dem
- Kommunikationsgeräte (101) innerhalb des industriellen Automatisierungssystems mittels einer jeweiligen Namensdienstkomponente (111) Informationen über Zuordnungen zwischen Gerätenamen (112) und Kommunikationsnetzadressen innerhalb ihres jeweiligen Teilnetzes entsprechend einem Namensauflösungsprotokoll verbreiten,
**dadurch gekennzeichnet, dass**
- Teilnetze (201, 202) miteinander koppelnde Router (102) jeweils eine korrespondierende Namensdienstkomponente (122) umfassen, durch die Informationen über sämtliche Zuordnungen zwischen Gerätenamen (112) und Kommunikationsnetzadressen von Kommunikationsgeräten (101) untergeordneter Teilnetze (201) aggregiert werden, wobei die aggregierten Informationen auf den entsprechend dem Namensauflösungsprotokoll verbreiteten Informationen über Zuordnungen zwischen Gerätenamen (112) und Kommunikationsnetzadressen basieren,
- die aggregierten Informationen über Zuordnungen zwischen Gerätenamen (112) und Kommunikationsnetzadressen von Kommunikationsgeräten (101) durch die Namensdienstkomponenten (122) der Router (102) an eine Diagnoseserverkomponente (121) des jeweiligen Routers (102) abrufbar bereitgestellt werden,
- die Diagnoseserverkomponenten (121) der jeweiligen Router (102) autorisierten Diagnosesystemen (103) teilnetzübergreifend Zugriff auf Informationen über Zuordnungen zwischen Gerätenamen (112) und Kommunikationsnetzadressen von Kommunikationsgeräten (101) einräumen, die von dem jeweiligen Router (102) unterlagerten Teilnetzen (201) umfasst sind.

2. Verfahren nach Anspruch 1,
bei dem die Kommunikationsgeräte die Informationen über Zuordnungen zwischen Gerätenamen und Kommunikationsnetzadressen mittels ihrer jeweiligen Namensdienstkomponente dezentral und konfigurationslos verbreiten.

3. Verfahren nach einem der Ansprüche 1 oder 2,
bei dem die Informationen über Zuordnungen zwischen Gerätenamen und Kommunikationsnetzadressen entsprechend Multicast DNS Protokoll als Namensauflösungsprotokoll verbreitet werden.

4. Verfahren nach einem der Ansprüche 1 bis 3,
bei dem die Namensdienstkomponenten innerhalb des das jeweilige Kommunikationsgerät umfassenden Teilnetzes Nachrichten entsprechend Multicast DNS Protokoll erzeugen und auswerten.

5. Verfahren nach einem der Ansprüche 1 oder 2,
bei dem das industrielle Automatisierungssystem PROFINET-basiert ist, und bei dem die Kommunikationsgeräte die Informationen über Zuordnungen zwischen Gerätenamen und Kommunikationsnetzadressen entsprechend Discovery and Basic Configuration Protocol verbreiten.

6. Verfahren nach einem der Ansprüche 1 bis 4,
bei dem die Namensdienstkomponenten jeweils Internet-Protokoll-basiert betrieben werden.

7. Verfahren nach Anspruch 6,
bei dem die Namensdienstkomponenten jeweils Informationen über sämtliche Kommunikationsnetzadressen des jeweiligen Kommunikationsgeräts verbreiten.

8. Verfahren nach Anspruch 7,
bei dem die Kommunikationsnetzadressen Internet-Protokoll, Version 6 entsprechen und zumindest eine implizite Angabe ihres Gültigkeitsbereichs umfassen.

9. Router zur Durchführung des Verfahrens nach einem der Ansprüche 1 bis 8 mit
- einer Namensdienstkomponente (122), die dafür ausgestaltet und eingerichtet ist, Informationen über sämtliche Zuordnungen zwischen Gerätenamen (112) und Kommunikationsnetzadressen von Kommunikationsgeräten (101) untergeordneter Teilnetze (201) zu aggregieren, wobei die aggregierten Informationen auf entsprechend einem Namensauflösungsprotokoll durch die Kommunikationsgeräte (101) verbreiteten Informationen über Zuordnungen zwischen Gerätenamen (112) und Kommunikationsnetzadressen basieren,
- einer Diagnoseserverkomponente (121), die dafür ausgestaltet und eingerichtet ist, die aggregierten Informationen über Zuordnungen zwischen Gerätenamen (112) und Kommunikationsnetzadressen von Kommunikationsgeräten (101) von der Namensdienstkomponente (122) abzurufen und autorisierten Diagnosesystemen (103) teilnetzübergreifend Zugriff auf die Informationen über Zuordnungen zwischen Gerätenamen (112) und Kommunikationsnetzadressen von Kommunikationsgeräten (101) einzuräumen.

## Claims

1. Method for providing information about communication network addresses within an industrial automation system, in which
- communication devices (101) within the industrial automation system broadcast information about associations between device names (112) and communication network addresses within their respective subnetwork in accordance with a name resolution protocol by way of a respective name service component (111),
**characterized in that**
- routers (102) that couple subnetworks (201, 202) to one another each comprise a corresponding name service component (122) by way of which information about all of the associations between device names (112) and communication network addresses of communication devices (101) of subordinate subnetworks (201) is aggregated, wherein the aggregated information is based on the information, broadcast in accordance with the name resolution protocol, about associations between device names (112) and communication network addresses,
- the aggregated information about associations between device names (112) and communication network addresses of communication devices (101) is provided, in a manner able to be retrieved, by the name service components (122) of the routers (102) to a diagnosis server component (121) of the respective router (102),
- the diagnosis server components (121) of the respective routers (102) grant authorized diagnosis systems (103) subnetwork-wide access to information about associations between device names (112) and communication network addresses of communication devices (101) that are contained within subnetworks (201) subordinate to the respective router (102).

2. Method according to Claim 1,
in which the communication devices broadcast the information about associations between device names and communication network addresses in a decentralized manner and without a configuration by way of their respective name service component.

3. Method according to either of Claims 1 and 2,
in which the information about associations between device names and communication network addresses is broadcast in accordance with the Multicast DNS Protocol as name resolution protocol.

4. Method according to one of Claims 1 to 3,
in which the name service components generate and evaluate messages in accordance with the Multicast DNS Protocol within the subnetwork containing the respective communication device.

5. Method according to either of Claims 1 and 2,
in which the industrial automation system is PROFINET-based, and in which the communication devices broadcast the information about associations between device names and communication network addresses in accordance with the Discovery and Basic Configuration Protocol.

6. Method according to one of Claims 1 to 4,
in which the name service components are in each case operated based on the Internet Protocol.

7. Method according to Claim 6,
in which the name service components each broadcast information about all of the communication network addresses of the respective communication device.

8. Method according to Claim 7,
in which the communication network addresses correspond to Internet Protocol version 6 and comprise at least implicit information about their scope.

9. Router for performing the method according to one of Claims 1 to 8, having
- a name service component (122) that is designed and configured to aggregate information about all of the associations between device names (112) and communication network addresses of communication devices (101) of subordinate subnetworks (201), wherein the aggregated information is based on information, broadcast by the communication devices (101) in accordance with a name resolution protocol, about associations between device names (112) and communication network addresses,
- a diagnosis server component (121) that is designed and configured to retrieve the aggregated information about associations between device names (112) and communication network addresses of communication devices (101) from the name service component (122) and to grant authorized diagnosis systems (103) subnetwork-wide access to the information about associations between device names (112) and communication network addresses of communication devices (101).

## Revendications

1. Procédé de mise à disposition d'informations sur des adresses dans le réseau de communication dans un système d'automatisation industriel, dans lequel
- des appareils (101) de communication au sein du système d'automatisation industriel diffusent, conformément à un programme de résolution de dénomination, au moyen d'un composant (111) de service de dénomination respectif, des informations sur des associations entre des dénominations (112) d'appareils et des adresses dans le réseau de communication au sein de leur réseau partiel respectif,
**caractérisé en ce que**
- des routeurs (102), couplant entre eux des réseaux (201, 202) partiels, comprennent chacun un composant (122) de service de dénomination correspondant, par lesquels des informations sur l'ensemble des associations entre des dénominations (112) d'appareils et des adresses dans le réseau de communication d'appareils (101) de communication de réseaux (201) partiels subordonnés sont agrégées, les informations agrégées reposant sur les informations, diffusées conformément au programme de résolution de dénomination, sur des associations entre des dénominations (112) d'appareils et des adresses dans le réseau de communication,
- les informations agrégées sur des associations entre des dénominations (112) d'appareils et des adresses dans le réseau de communication d'appareils (101) de communication sont, par les composants (122) de service de dénomination, des routeurs (102), mis, avec possibilité de les appeler, à disposition sur un composant (121) de serveur de diagnostic du routeur (102) respectif,
- les composants (121) de serveur de diagnostic des routeurs (102) respectifs accordent, aux systèmes (103) de diagnostic autorisés, accès, avec empiétement sur le réseau partiel, à des informations sur des associations entre des dénominations (112) d'appareils et des adresses dans le réseau de communication d'appareils (101) de communication, qui sont comprises par le routeur (102) respectif de réseaux (201) partiels subordonnés.

2. Procédé suivant la revendication 1,
dans lequel les appareils de communication diffusent, de manière décentralisée et sans configuration, au moyen de leur composant de service de dénomination respectif, les informations sur des associations entre des dénominations d'appareils et des adresses dans le réseau de communication.

3. Procédé suivant l'une des revendications 1 ou 2,
dans lequel les informations sur des associations entre des dénominations d'appareils et des adresses dans le réseau de communication sont diffusées conformément au programme multicast DNS, comme programme de résolution de dénomination.

4. Procédé suivant l'une des revendications 1 à 3,
dans lequel les composants de service de dénomination produisent et exploitent, au sein du réseau partiel comprenant l'appareil de communication respectif, des messages correspondant au programme multicast DNS.

5. Procédé suivant l'une des revendications 1 ou 2,
dans lequel le système d'automatisation industriel repose sur PROFINET, et dans lequel les appareils de communication diffusent, conformément au programme discovery and basic configuration, les informations sur des associations entre des dénominations d'appareils et des adresses dans le réseau de communication.

6. Procédé suivant l'une des revendications 1 à 4,
dans lequel on fait fonctionner des composants de services de dénominations, chacun sur la base d'un programme d'internet.

7. Procédé suivant la revendication 6,
dans lequel les composants de service de dénomination diffusent chacun des informations sur l'ensemble des adresses dans le réseau de communication de l'appareil de communication respectif.

8. Procédé suivant la revendication 7,
dans lequel les adresses dans le réseau de communication correspondent au programme internet version 6 et comprennent au moins une indication implicite de leur domaine de validité.

9. Routeur pour effectuer le procédé suivant l'une des revendications 1 à 8, comprenant
- un composant (122) de service de dénomination, conformé et conçu pour agréger des informations sur l'ensemble des associations entre des dénominations (112) d'appareils et des adresses dans le réseau de communication d'appareils (101) de communication, de réseaux (201) partiels subordonnés, les informations agrégées reposant sur des informations sur des associations entre des dénominations (112) d'appareils et des adresses dans le réseau de communication diffusées par les appareils (101) de communication, conformément à un programme de résolution de dénomination,
- un composant (121) de serveur de diagnostic, conformé et conçu pour appeler par le composant (122) de service de dénomination les informations agrégées sur des associations entre des dénominations (112) d'appareils et des adresses dans le réseau de communication d'appareils (101) de communication et accorder, à des systèmes (103) de diagnostic autorisés, accès, avec empiétement sur le réseau partiel, aux informations sur des associations entre des dénominations (112) d'appareils et des adresses dans le réseau de communication d'appareils (101) de communication.
